# EUROPÄISCHE PATENTANMELDUNG

(11) **EP 2 085 846 A2**
(43) Veröffentlichungstag der Anmeldung: **05.08.2009**
(21) Anmeldenummer: 09000550.5
(22) Anmeldetag: 16.01.2009
(51) Int. Cl.: G05B 19/4067, B25J 9/16

(54) **Verfahren zum Wiederanfahren eines Roboters**

(30) Priorität: 01.02.2008 DE 102008007438
(71) Anmelder: ABB AG, 68309 Mannheim (DE)
(72) Erfinder: Börner, Gunter, Dr.-Ing., 74889 Sinsheim/Eschelbach (DE); Eickmeyer, Dietmar, Dr.-Ing., 68542 Heddesheim (DE)

(57) **Zusammenfassung**

Die Erfindung betrifft ein Verfahren zum Wiederanfahren eines Roboters nach einer vorzeitigen Unterbrechung eines ihn steuernden Bearbeitungsprogramms an einer Unterbrechungsstelle (15). Der Roboter weist eine Zerstäubervorrichtung zum selbständigen Beschichten von Werkstücken auf und das Bearbeitungsprogramm dient zur Vorgabe einer Sollbewegung der Zerstäubervorrichtung in Bezug auf ein mittels einer Fördereinrichtung bewegbares zu beschichtendes Werkstück sowie zur Vorgabe der dazugehörigen Sollzerstäuberparameter. Die Zerstäubervorrichtung wird nach der Unterbrechung des Bearbeitungsprogramms zunächst zu einem auf dem Sollbewegungspfad (30) befindlichen Wiederanfahrpunkt (18) bewegt, welcher vor dem Unterbrechungspunkt (15) liegt. Danach wird die Zerstäubervorrichtung dann auf dem Sollbewegungspfad (30) entsprechend einer vorgebbaren Geschwindigkeitsfunktion zu einem auf dem Sollbewegungspfad (30) befindlichen Übergabepunkt (20) bewegt, welcher nach dem Unterbrechungspunkt (15) liegt. Zwischen Wiederanfahrpunkt (18) und Übergabepunkt (20) wird die Zerstäubervorrichtung wieder eingeschaltet. Die durch das Bearbeitungsprogramm vorgesehenen Sollzerstäuberparameter werden zwischen Wiederanfahrpunkt (18) und Übergabepunkt (20) wenigstens einmal an die jeweilige aktuelle Geschwindigkeit der Zerstäubervorrichtung in Relation zu der Sollgeschwindigkeitsvorgabe angepasst und angewendet und mit Erreichen des Übergabepunktes (20) kommen alle Sollbewegungs- und Sollzerstäuberparameter des Bearbeitungsprogramms zur Anwendung.

## Beschreibung

Die Erfindung betrifft ein Verfahren zum Wiederanfahren eines Roboters nach einer vorzeitigen Unterbrechung eines ihn steuernden Bearbeitungsprogramms an einer Unterbrechungsstelle, wobei der Roboter eine Zerstäubervorrichtung zum selbständigen Beschichten von Werkstücken aufweist und das Bearbeitungsprogramm zur Vorgabe einer Sollbewegung der Zerstäubervorrichtung auf einem Sollbewegungspfad in Bezug auf ein mittels einer Fördereinrichtung bewegbares zu beschichtendes Werkstück sowie zur Vorgabe der dazugehörigen Sollzerstäuberparameter dient, wobei der aktuelle Status des Bearbeitungsprogramms im Zeitpunkt der Unterbrechung gespeichert wird.

Es ist allgemein bekannt, dass in der industriellen Lackiertechnik, beispielsweise beim Lackieren von Automobilkarosserien, Roboter verwendet werden. Derartige Roboter weisen eine Zerstäubervorrichtung auf, beispielsweise einen Hochrotationszerstäuber oder einen Luftzerstäuber. Üblicherweise befinden sich die zu lackierenden Werkstücke auf einem Warenträger, welcher mit Hilfe einer Fördereinrichtung, beispielsweise einem Boden- oder Hängeförderer, bewegbar sind. Hierdurch sind die Werkstücke in eine Lackierkabine ein- beziehungsweise ausförderbar.

Je nach gegebenen Randbedingungen ist es sowohl üblich, dass die Werkstücke während des Lackierprozesses mit der Fördereinrichtung kontinuierlich bewegt werden, als auch, dass diese während des Lackierprozesses nicht bewegt werden.

Ein Bearbeitungsprogramm gibt sowohl die Sollbewegung der Zerstäubereinrichtung um das zu lackierende Werkstück vor, welche von dem Roboter ausgeführt wird, als auch die Sollzerstäuberparameter, mit welchem die Zerstäubereinrichtung betrieben wird. Die Bewegung der Zerstäubereinrichtung erfolgt hierbei relativ zum Werkstück.

In einem Ausnahmefall, beispielsweise bei einem Not-Aus, wird das Bearbeitungsprogramm unmittelbar unterbrochen, das heißt die Bewegung der Zerstäubereinrichtung wird angehalten und die Zerstäubervorrichtung abgeschaltet, so dass der Lackierprozess unterbrochen ist. Darüber hinaus wird auch die Fördereinrichtung angehalten. Nach der Unterbrechung befinden sich der Roboter beziehungsweise die Zerstäubervorrichtung und das zu beschichtende Werkstück aufgrund unterschiedlichen beziehungsweise undefinierten Bremsverhaltens wegen der Massenträgheit in einer nicht definierten Position zueinander.

Es gibt verschiedene Vorgehensweisen, den Beschichtungsprozess an oder in der Nähe der Unterbrechungsstelle wieder zu starten, so dass auf dem zu beschichtenden Werkstück möglichst keine durch die Unterbrechung bedingte Verschlechterung des Beschichtungsergebnisses auftritt.

Eine mögliche Verfahrensweise ist aus dem Europäischen Patent EP 0285075 bekannt, in welchem die Wiederaufnahme der Bewegung der Zerstäubervorrichtung gemäß dem darin beschriebenen Stand der Technik mit sprungartiger Vorgabe der Sollgeschwindigkeit erfolgt. Aufgrund der Massenträgheit der Beschichtungsvorrichtung ist die tatsächliche Geschwindigkeit der Zerstäubervorrichtung während des Beschleunigungsvorgangs zumeist geringer als die Sollvorgabe der Geschwindigkeit. Eine zeitgleich gestartete Wiederaufnahme des Beschichtungsvorganges durch Anwendung der Sollzerstäuberparameter führt beim Beschleunigungsvorgang zu einer Überbeschichtung des zu beschichtenden Werkstücks.

Darüber hinaus ist auch die Wiederaufnahme der Anwendung der Sollzerstäuberparameter in einer Anfangsphase von einem instabilen Sprühprozess begleitet, wodurch die erzielte Beschichtungsqualität an der Unterbrechungsstelle ebenfalls nachteilig beeinflusst wird.

Ausgehend von diesem Stand der Technik ist es Aufgabe der Erfindung, ein Verfahren der eingangs genannten Art anzugeben, mittels welchem die Qualität des Beschichtungsergebnisses beim Wiederanfahren verbessert werden kann.

Diese Aufgabe wird erfindungsgemäß gelöst durch die im Anspruch 1 angegebenen Merkmale.

Demgemäß ist das erfindungsgemäße Verfahren dadurch gekennzeichnet, dass die Zerstäubervorrichtung nach der Unterbrechung des Bearbeitungsprogramms unter Berücksichtigung der Position des Werkstückes zunächst in Richtung eines Ausgangspunktes zu einem auf dem Sollbewegungspfad befindlichen Wiederanfahrpunkt zurückbewegt wird, welcher vor dem Unterbrechungspunkt liegt. Die Zerstäubervorrichtung wird dann auf dem Sollbewegungspfad entsprechend einer vorgebbaren Geschwindigkeitsfunktion zu einem auf dem Sollbewegungspfad befindlichen Übergabepunkt bewegt, welcher hinter dem Unterbrechungspunkt liegt und ab welchem die festgelegten Sollbearbeitungsparameter zur Anwendung kommen. Zwischen Wiederanfahrpunkt und Übergabepunkt wird die Zerstäubervorrichtung wieder eingeschaltet, wobei die durch das Bearbeitungsprogramm vorgesehenen Sollzerstäuberparameter zwischen Wiederanfahrpunkt und Übergabepunkt bedarfsweise ein- oder mehrmals an die jeweilige aktuelle Geschwindigkeit der Zerstäubervorrichtung in Relation zu der Sollgeschwindigkeitsvorgabe angepasst und angewendet werden. Mit Erreichen des Übergabepunktes kommen alle Sollbewegungs- und Sollzerstäuberparameter des Bearbeitungsprogramms zur Anwendung.

Durch eine derartige Verfahrensweise beim Wiederanfahren des Roboters, das heißt Fokussierung auf den Wiederanfahrbereich zwischen Wiederanfahrpunkt und Übergabepunkt, wird der Einfluss von Einschwingvorgängen auf den Beschichtungsprozess deutlich vermindert und so das Beschichtungsergebnis verbessert.

Durch einen mittels der Geschwindigkeitsfunktion vorgebbaren Anstieg der Geschwindigkeit der Zerstäuberbewegung im Wiederanfahrbereich werden Abweichungen der tatsächlichen Bewegungsgeschwindigkeit von der vorgegebenen Bewegungsgeschwindigkeit nämlich deutlich reduziert. Dies ist insbesondere auf die damit verbundenen verringerten Anforderungen an das Beschleunigungsvermögen des betreffenden Roboters zurückzuführen.

Geschwindigkeitsabweichungen sind maßgeblich für eine Verschlechterung des Beschichtungsergebnisses, das heißt, ein gegenüber Sollgeschwindigkeit zu langsam bewegter Zerstäuber appliziert zwangsläufig bei Anwendung von Sollapplikationsparametern in dem betreffenden Bereich eine zu hohe Schichtdicke.

Weiterhin bedeutsam für die Qualität des Beschichtungsergebnisses im Wiederanfahrbereich ist auch der Einschaltvorgang des Zerstäubers, welcher mit einem Einschwingvorgang des Sprühprozesses einhergeht. Durch ein Anpassen der Zerstäuberparameter an eine reduzierte Geschwindigkeit sinkt folgerichtig auch die benötigte Ausflussmenge in den Bereichen mit reduzierter Geschwindigkeit. Eine reduzierte Ausflussmenge bedingt wiederum ein verringertes Einschwingverhalten des Sprühprozesses, was sich ebenfalls günstig auf das Beschichtungsergebnis auswirkt.

Gemäß einer weiteren Ausgestaltung des erfindungsgemäßen Verfahrens erfolgt das Einschalten der Zerstäubervorrichtung innerhalb eines Wiedereinschaltbereichs, der den Unterbrechungspunkt und einen Abschaltpunkt umfasst, an welchem nach der unplanmäßigen, störungsbedingten Unterbrechung des Bearbeitungsprogramms der Beschichtungsvorgang beendet wurde.

Dementsprechend schließt der Beschichtungsprozess an der Stelle des Bearbeitungsprogramms wieder an, an der er zuvor unterbrochen wurde. Das Beschichtungsergebnis kann somit trotz Störfall in günstiger Weise weiter verbessert werden.

In einer besonders bevorzugten Variante des erfindungsgemäßen Verfahrens wird durch eine Anpassung der Zerstäuberparameter eine geschwindigkeitsunabhängige Schichtdickenverteilung des aufgetragenen Beschichtungsmaterials erreicht, wobei die Schichtdickenverteilung näherungsweise der Schichtdickenverteilung bei Sollzerstäuberparametern entspricht.

Infolge einer derartigen Anpassung wird erreicht, dass die geometrische Form eines Zerstäubersprühbildes bei reduzierter Bewegungsgeschwindigkeit der geometrischen Form des Zerstäubersprühbildes bei Sollbewegungsgeschwindigkeit gleicht. Es ist hierbei lediglich ein proportionaler Unterschied bezüglich der applizierten Schichtdicke gegeben, welche mittels der jeweiligen Sprühbilder bei Verwendung von gleichem Beschichtungsmaterial und jeweils gleichen Bewegungsparametern auf einem identischen Werkstück erzeugt wird.

Somit ist in vorteilhafter Weise die Bewegungsgeschwindigkeit des Zerstäubers veränderbar, ohne dass dies zu einer Änderung des Beschichtungsergebnisses im Vergleich zu dem Beschichtungsergebnis bei Sollgeschwindigkeit hat.

Gemäß einer besonders günstigen Ausgestaltung des erfindungsgemäßen Verfahrens werden wenigstens die Parameter Lackausflussmenge und Lenk- und/oder Hornluft angepasst.

Die jeweilige Anpassung der Ausflussmenge an Applikationsmaterial beziehungsweise Lack erfolgt insbesondere entsprechend dem Verhältnis der Sollbewegungsgeschwindigkeit zur jeweiligen Bewegungsgeschwindigkeit im Wiederanfahrbereich, um so in beiden Fällen die ausgebrachte Farbmenge pro Wegstrecke anzugleichen. Abweichungen von diesem Verhältnis führen zu einem unterschiedlichen Wirkungsgrad des Beschichtungsprozesses.

Die Lenkluft ist ein Parameter bei einem Rotationszerstäuber, mit Hilfe dessen die Form eines Sprühbildes verändert werden kann. Ein entsprechender Parameter bei einem Luftzerstäuber ist die Hornluft. Durch Anpassen dieser Parameter ist das Sprühbild in geeigneter Weise an eine veränderte Bewegungsgeschwindigkeit anpassbar.

Gemäß einer besonders bevorzugten Variante des Verfahrens wird auch der Zerstäuberparameter Drehzahl oder Zerstäuberluft angepasst.

Die Drehzahl ist bei einem Rotationszerstäuber ein Maß für die Zerstäubung des Applikationsmaterial beziehungsweise Lacks. Bei einem Luftzerstäuber ist dies die Zerstäuberluft. Wird der für die Zerstäubung maßgebliche Parameter, also Drehzahl oder Zerstäuberluft, bei einer Veränderung der Lackausflussmenge eines Zerstäubers konstant gehalten, so ändert sich demgemäß die Tropfengröße der Lackpartikel bei der Zerstäubung.

Eine erhöhte Lackmenge erfordert aber eine erhöhte Zerstäubungsenergie, das heißt eine erhöhte Drehzahl beziehungsweise eine erhöhte Menge an Zerstäuberluft, um die Tropfengröße der Lackpartikel annähernd konstant zu halten.

Eine konstante Tropfengrößenverteilung aber wiederum gleicht in vorteilhafter Weise das Beschichtungsergebnis im Wiederanfahrbereich weiter an das Beschichtungsergebnis im Sollzustand, also dem Beschichtungsergebnis ohne Unterbrechung des Bearbeitungsprogramms bei Sollparametern, an.

Gemäß einer weiteren Ausführungsform entspricht die vorgebbare Geschwindigkeitsfunktion im Übergabepunkt der Sollgeschwindigkeitsvorgabe durch das Bearbeitungsprogramm. Infolge der Kontinuität der Parameter im Übergabebereich werden Einschwingvorgänge bei der Zerstäuberbewegung vermieden und das Beschichtungsergebnis weiter verbessert.

Gemäß einer weiteren Variante des erfindungsgemäßen Verfahrens entsprechen die angepassten Zerstäuberparameter im Übergabepunkt der Zerstäuberparametervorgabe durch das Bearbeitungsprogramm. Auch hier werden infolge der Kontinuität der Lackierparameter im Übergabebereich Einschwingvorgänge vermieden und das Beschichtungsergebnis weiter verbessert.

Gemäß einer bevorzugten Ausführungsvariante entspricht die Geschwindigkeitsvorgabe durch die Geschwindigkeitsfunktion einer orts- oder zeitabhängigen Rampe, welche in vorteilhafter Weise Diskontinuitäten in der Bewegung vermeidet, was zu einem weiter verbesserten Beschichtungsergebnis führt.

Gemäß einer vorteilhaften Variante des erfindungsgemäßen Verfahrens erfolgt die Anpassung der Zerstäuberparameter vor deren Verwendung beim Wiederanfahren. Hierbei werden die Zerstäuberparameter unter Berücksichtigung der Geschwindigkeitsvorgabe im Wiederanfahrbereich in vorgebbaren Zeit- oder Distanzabschnitten für den jeweiligen Abschnitt ermittelt und gespeichert. Für die Speicherung der jeweiligen Zerstäuberparameter kann beispielsweise eine externe, mit dem Roboter verbundene Datenverarbeitungsanlage, aber auch eine dem Roboter als Steuereinheit dienende Datenverarbeitungsanlage vorgesehen sein.

Rechenzeiten, welche zur Ermittlung der angepassten Zerstäuberparameter benötigt werden und die Anzahl der möglichen Anpassungsschritte nachteilig reduzieren, lassen sich somit in vorteilhafter Weise in einen zeitlich unkritischen Zeitraum vor dem Wiederanlauf verlegen.

Die Anzahl der Abschnitte, in welchen eine Anpassung der Zerstäuberparameter erfolgt, ist auf diese Weise steigerbar.

Gemäß einer besonders bevorzugten Ausführungsform des erfindungsgemäßen Verfahrens werden Schaltverzugszeiten der Zerstäubervorrichtung kompensiert, wodurch die Genauigkeit bei der Einhaltung von Schaltpunkten gesteigert und die Qualität des Beschichtungsergebnisses nochmals erhöht werden.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigt die einzige Fig. Eine Schemaskizze für den Ablauf beim Wiederanfahren

Die einzige Fig. zeigt in schematischer Darstellung ein Beispiel für einen Zeitablaufplan 10 des erfindungsgemäßen Ablaufs beim Wiederanfahren eines Roboters mit Zerstäubervorrichtung. Die Zerstäubervorrichtung wird vor Eintritt einer Unterbrechung des Bearbeitungsprogramms mit einem Roboter programmgemäß entlang des Sollbewegungspfades 30 mit Sollgeschwindigkeit bewegt. Der Zerstäuber ist aktiv und appliziert mit den für den jeweiligen Bahnabschnitt vorgesehenen Applikationsparametern. Bei einem Rotationszerstäuber können dies insbesondere Farbausflussmenge, Drehzahl, eine erste Lenkluft, eine zweite Lenkluft oder auch eine Hochspannung sein. Die üblichen Parameter eines Luftzerstäubers sind Farbausflussmenge, Hornluft und Zerstäuberluft.

Der Zerstäuber wird nun über den ersten Bahnpunkt 12 bewegt. Durch sequentielles Anfahren von Bahnpunkten, welche üblicherweise die Koordinaten eines Punktes und dessen Orientierung im Raum beinhalten, ergibt sich ein Sollbewegungspfad der Zerstäuberbewegung. Es ist üblich, dass derartige Punkte, wenn diese nicht auf einer Geraden liegen, nicht immer direkt angefahren werden, sondern in einem vorgebbaren Radius um den Punkt, beispielsweise 100 mm, automatisch von der Steuerung des Roboters verschliffen werden.

Nun erreicht der Zerstäuber den Abbruchpunkt 14. An genau diesem Punkt wird ein Unterbrechungssignal gegeben, beispielsweise bedingt durch ein Betätigen eines Not-Aus-Schalters, welches ein Unterbrechen des Bearbeitungsprogramms zur Folge hat. Die Bremsen aller Achsen des Roboters, welcher den Zerstäuber beispielsweise mit einer Geschwindigkeit vom 1200mm/s bewegt, werden betätigt und die Roboterbewegung endet nach einem Abbremsvorgang an einem undefinierten Endpunkt 16, welcher beispielsweise in einer Entfernung von 20cm bis 40cm von dem Unterbrechungspunkt und nicht auf der Sollbewegungsbahn liegt. Des Weiteren wird auch eine möglicherweise vorhandene Fördereinrichtung, auf der sich das zu lackierende Werkstück befindet, gestoppt, wodurch die Endposition der Zerstäubervorrichtung zum zu lackierenden Werkstück in der Endposition 16 in noch stärkerem Maße undefiniert ist.

Neben der Unterbrechung der Roboterbewegung bewirkt das Unterbrechungssignal auch eine Unterbrechung des Lackierprozesses. Insbesondere die Farbzufuhr zur Zerstäubervorrichtung wird unterbrochen. Aufgrund der zeitlichen Verzögerung beim Schalten eines betreffenden Ventils wird der Zerstäubungsvorgang erst wirksam beim Überqueren des Unterbrechungspunktes 15 unterbrochen. Bei einer angenommenen Reaktionszeit der Unterbrechung der Farbzufuhr von 50 ms und einer angenommenen nach wie vor konstanten Bahngeschwindigkeit von 1000 mm/s ergäbe sich beispielsweise ein Abstand von 50 mm zwischen Abbruchpunkt 14 und Unterbrechungspunkt 15.

Nun ist der gesamte Lackiervorgang unterbrochen und eine eventuelle Ursache für die Unterbrechung ist zu beseitigen. Nach deren Beseitigung ist der Lackiervorgang in einer derartigen Weise wiederaufzunehmen, dass um den Abbruchpunkt 14 beziehungsweise um den Farbabschaltpunkt 15 eine möglichst geringe Beeinträchtigung des Lackierergebnisses erfolgt.

Hierzu wird der Zerstäuber zunächst in eine Relativposition zum zu beschichtenden Werkstück bewegt, welche dem Wiederanfahrpunkt 18 entspricht. Dieser befindet sich auf der programmgemäßen Bewegungsbahn und zwar örtlich vor dem Abbruchpunkt 14. Diese Bewegung kann manuell durchgeführt werden, aber auch automatisch auf einem eigenständig durch eine Steuereinrichtung ermittelten Bewegungspfad erfolgen, wobei insbesondere Kollisionen zwischen zu lackierendem Werkstück und dem Roboter beziehungsweise der Zerstäubervorrichtung zu vermeiden sind.

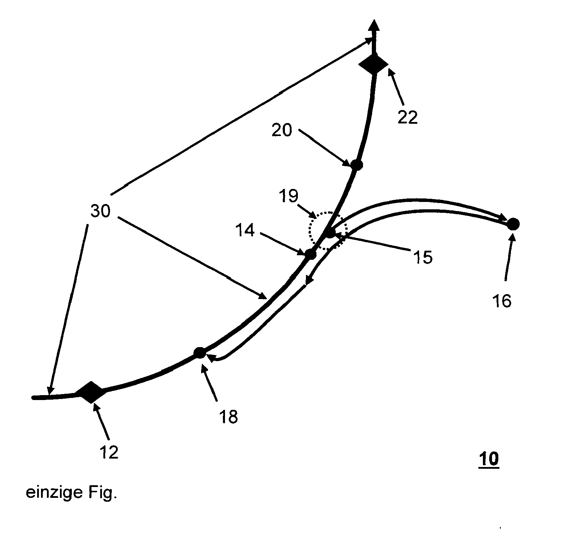

Die Roboterbewegung entlang des programmgemäßen Bewegungspfades wird nun gestartet, wobei die Zerstäubervorrichtung zunächst noch nicht eingeschaltet wird und wobei die Vorgabe für die Roboterbewegungsgeschwindigkeit beginnend beispielsweise von 0mm/s rampenähnlich an die Sollgeschwindigkeit angepasst wird. Nun passiert der Zerstäuber mit einer Geschwindigkeit von beispielsweise 1/3 der Sollgeschwindigkeit den Abbruchpunkt 14. Der Unterbrechungspunkt 15 wird ebenfalls passiert, wobei dieser Punkt unter Umständen eine leichte Abweichung gegenüber der Sollbewegungsbahn aufweist. In der Fig. 1 ist ein Wiedereinschaltbereich 19 dargestellt, welcher aus einem Kreis um den Unterbrechungspunkt 15 gebildet wird und welcher einen Schnittbereich mit dem programmgemäßen Roboterbewegungspfad 30 aufweist.

Bei Eintritt des Zerstäubers in diesen Schnittbereich wird die Applikation des Zerstäubers wieder gestartet. Es ist darauf zu achten, dass eventuelle Schaltverzugszeiten beim Einschalten des Zerstäubers zweckmäßig zu kompensieren sind, so dass der eigentliche Lackiervorgang tatsächlich im Schnittbereich beginnt.

Die Zerstäuberparameter sind in dieser Phase des Wiederanfahrens an die Bewegungsgeschwindigkeit des Zerstäubers angepasst, welcher entlang seines Sollbewegungspfades mit einer Geschwindigkeit bewegt wird, welche kleiner als die programmgemäße Sollgeschwindigkeit ist. In erster Nährung bewirkt die Anpassung der Zerstäuberparameter an die reduzierte Geschwindigkeit, dass das in der Wiederanfahrphase erzielte Sprühergebnis auf dem beschichteten Werkstück dem Sprühergebnis ähnelt, das bei Sollparametern des Bearbeitungsprogramms, also bei Verwendung von Sollbewegungsdaten und Sollzerstäuberdaten, erzielt worden wäre.

Bei einer Geschwindigkeit von beispielsweise 1/3 der Sollgeschwindigkeit ist prinzipiell die Lackausflussmenge zunächst auch auf 1/3 der Sollausflussmenge zu reduzieren. Da sich durch die veränderte Ausflussmenge aber auch die Form des Sprühbildes ändert - dieses kann beispielsweise dadurch seine Breite ändern - sind weitere Applikationsparameter derart anzupassen, dass bei reduzierter Ausflussmenge die Form des Sprühbildes erhalten bleibt. Es sind weitere Iterationsschritte denkbar, bei denen beispielsweise die Genauigkeit der Anpassung gesteigert wird, beispielsweise auch bezüglich der Änderung des Auftragswirkungsgrades bei veränderten Zerstäuberparametern. Eine geeignete Methode zur Anpassung der Applikationsparameter ist beispielsweise in der DE 102007026041.7 beschrieben.

In besonders vorteilhafter Weise wird in diesem Fall die Abschnittslänge der Bewegungsbahn, bei der Einschwingvorgänge beim Einschalten des Zerstäubers negativen Einfluss auf das Lackierergebnis haben, auf 1/3 gegenüber der Abschnittslänge bei Sollgeschwindigkeit begrenzt. Darüber hinaus sind derartige Einschwingvorgänge bei geringeren Lackausflussmengen ebenfalls verringert, so dass die erzielte Lackierqualität weiter gesteigert wird.

Eine weitere Qualitätssteigerung des Lackierergebnisses wird dadurch erzielt, dass die Beschleunigung des Zerstäubers in einem längeren Abschnitt, nämlich zwischen dem Wiederanfahrpunkt 18 und dem Übergabepunkt 20, erfolgt, und daher die tatsächliche Bewegungsgeschwindigkeit der jeweiligen Vorgabe der Soligeschwindigkeit in hohem Maße entspricht. Überbeschichtungen durch eine gegenüber einer Geschwindigkeitsvorgabe zu langsamen realen Roboterbewegung werden dadurch vermieden.

Nun wird der angeschaltete Zerstäuber mittels des Roboters weiter beschleunigt und erreicht den Übergabepunkt 20. Die Anpassung der Zerstäuberparameter erfolgt idealerweise kontinuierlich. Dies ist aber aus technischen Gründen zumeist nicht realisierbar. Aus diesem Grund erweist es sich als zweckmäßig, eine Anpassung der Zerstäuberparameter stufenweise durchzuführen.

Im Übergabepunkt 20 ist der Zerstäuber zweckmäßigerweise bereits auf Sollbewegungsgeschwindigkeit beschleunigt worden. Die verwendeten Zerstäuberparameter sind in diesem Punkt demgemäß bereits derart angepasst, dass sie den Sollzerstäuberparametern entsprechen. Ab dem Übergabepunkt wird nun in kontinuierlichem Übergang auf die Parameter des Bearbeitungsprogramms umgeschaltet.

### Bezugszeichenliste

- 10: Ablaufplan für den Ablauf beim Wiederanfahren
- 12: erster Bahnpunkt
- 14: Abbruchpunkt
- 15: Unterbrechungspunkt
- 16: Endpunkt
- 18: Wiederanfahrpunkt
- 19: Wiedereinschaltbereich
- 20: Übergabepunkt
- 22: zweiter Bahnpunkt
- 30: Sollbewegungspfad

## Patentansprüche

1. Verfahren zum Wiederanfahren eines Roboters nach einer vorzeitigen Unterbrechung eines ihn steuernden Bearbeitungsprogramms an einer Unterbrechungsstelle, wobei der Roboter eine Zerstäubervorrichtung zum selbständigen Beschichten von Werkstücken aufweist und das Bearbeitungsprogramm zur Vorgabe einer Sollbewegung der Zerstäubervorrichtung auf einem Sollbewegungspfad in Bezug auf ein mittels einer Fördereinrichtung bewegbares zu beschichtendes Werkstück sowie zur Vorgabe der dazugehörigen Sollzerstäuberparameter dient, wobei der aktuelle Status des Bearbeitungsprogramms im Zeitpunkt der Unterbrechung gespeichert wird, **dadurch gekennzeichnet, dass**
die Zerstäubervorrichtung nach der Unterbrechung des Bearbeitungsprogramms unter Berücksichtigung der aktuellen Position des Werkstückes zunächst zu einem auf dem Sollbewegungspfad liegenden Wiederanfahrpunkt bewegt wird, welcher vor der Unterbrechungsstelle liegt, dass die Zerstäubervorrichtung dann auf dem Sollbewegungspfad entsprechend einer vorgebbaren Geschwindigkeitsfunktion zu einem auf dem Sollbewegungspfad befindlichen Übergabepunkt bewegt wird, welcher hinter der Unterbrechungsstelle liegt und ab welchem die festgelegten Sollbearbeitungsparameter zur Anwendung kommen, dass zwischen Wiederanfahrpunkt und Übergabepunkt die Zerstäubervorrichtung wieder eingeschaltet wird, dass die durch das Bearbeitungsprogramm vorgesehenen Sollzerstäuberparameter zwischen Wiederanfahrpunkt und Übergabepunkt wenigstens einmal an die jeweilige aktuelle Geschwindigkeit der Zerstäubervorrichtung in Relation zu der Sollgeschwindigkeitsvorgabe angepasst und angewendet werden und dass mit Erreichen des Übergabepunktes alle Sollbewegungs- und Sollzerstäuberparameter des Bearbeitungsprogramms zur Anwendung kommen.

2. Verfahren nach Anspruch 1, **dadurch gekennzeichnet, dass** das Einschalten der Zerstäubervorrichtung in einem Wiedereinschaltbereich erfolgt, welcher den Unterbrechungspunkt und einen Abschaltpunkt umfaßt, an welchem nach der Unterbrechung des Bearbeitungsprogramms der Beschichtungsvorgang beendet wurde.

3. Verfahren nach Anspruch 1 oder 2, **dadurch gekennzeichnet, dass** mit der Anpassung der Zerstäuberparameter eine geschwindigkeitsunabhängige Schichtdickenverteilung des applizierten Beschichtungsmaterials erreicht wird, welche Schichtdickenverteilung näherungsweise der bei Sollzerstäuberparametern entspricht.

4. Verfahren nach einem der vorangegangenen Ansprüche, **dadurch gekennzeichnet, dass** wenigstens die Parameter Ausflussmenge des Beschichtungsmaterials sowie Lenk- und/oder Hornluft angepasst werden.

5. Verfahren nach einem der vorangegangenen Ansprüche, **dadurch gekennzeichnet, dass** wenigstens einer der Parameter Drehzahl oder Zerstäuberluft angepasst werden.

6. Verfahren nach einem der vorangegangenen Ansprüche, **dadurch gekennzeichnet, dass** die vorgebbare Geschwindigkeitsfunktion im Übergabepunkt der Sollgeschwindigkeitsvorgabe durch das Bearbeitungsprogramm entspricht.

7. Verfahren nach einem der vorangegangenen Ansprüche, **dadurch gekennzeichnet, dass** die angepassten Zerstäuberparameter im Übergabepunkt der Zerstäuberparametervorgabe durch das Bearbeitungsprogramm entsprechen.

8. Verfahren nach einem der vorangegangenen Ansprüche, **dadurch gekennzeichnet, dass** die Geschwindigkeitsvorgabe durch die Geschwindigkeitsfunktion einer orts- oder zeitabhängigen Rampe entspricht.

9. Verfahren nach einem der vorangegangenen Ansprüche, **dadurch gekennzeichnet, dass** die Anpassung der Zerstäuberparameter vor deren Verwendung beim Wiederanfahren erfolgt.

10. Verfahren nach einem der vorangegangenen Ansprüche, **dadurch gekennzeichnet, dass** Schaltverzugszeiten der Zerstäubervorrichtung kompensiert werden.
